(19) Europäisches Patentamt

European Patent Office

Office européen des brevets

(11) Publication number: **0 047 580**
**B1**

(12) **EUROPEAN PATENT SPECIFICATION**

(45) Date of publication of patent specification: **19.02.86**

(21) Application number: **81303507.8**

(22) Date of filing: **31.07.81**

(51) Int. Cl.⁴: **A 01 B 15/14**

(54) Variable width plow.

(30) Priority: **12.08.80 FR 8017726**

(43) Date of publication of application:
**17.03.82 Bulletin 82/11**

(45) Publication of the grant of the patent:
**19.02.86 Bulletin 86/08**

(84) Designated Contracting States:
**DE GB IT SE**

(56) References cited:
**FR-A-1 473 287**
**FR-A-1 558 816**
**FR-A-2 366 779**
**FR-A-2 401 597**
**FR-A-2 418 611**
**FR-A-2 438 959**
**GB-A-1 459 923**

(73) Proprietor: **J. I. Case Company**
**700 State Street**
**Racine, WI 53404 (US)**

(72) Inventor: **Salva, Henri Edouard**
**16, Rue Victor Hugo**
**F-59170 Croix (FR)**

(74) Representative: **Geldard, David Guthrie et al**
**URQUHART-DYKES AND LORD 11th Floor,**
**Tower House Merrion Way**
**Leeds, LS2 8PB West Yorkshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to fully mounted plow systems, whether of the rollover type or not, and having a variable width, that is, plows in which the transverse spacing between furrow-cutting lines or so-called lines of action of two adjacent plow bottoms is adjustable in order to obtain correspondingly variable furrow pitch.

FR—A—2401597 shows a plow system of this type, adapted to be mounted on and pulled by a tractor, the system comprising a hitch assembly including link arms spaced apart in a common, substantially horizontal plane and connected to the tractor at their forward ends and a forecarriage unit extending between and connected to the rearward ends of the link arms and capable of pivoting thereto about a horizontal axis. A forward end of a link is pivoted to the forecarriage unit about a vertical axis, and a rearward end of the link is pivoted to an elongate plow beam, again about a vertical axis, the plow beam thus being trailed behind the forecarriage unit and lying generally in a horizontal plane and inclined to the direction of forward travel. The plow beam has a rear ground-engaging wheel and carries a plurality of plow bottom assemblies, each pivotally attached to the plow beam through a support bracket, the assemblies being equally spaced along the plow beam. An elongate coupling member extends generally parallel to the plow beam and is pivotally connected to each of the support brackets to interconnect the plow bottom assemblies, thus forming a device of the deformable parallelogram type.

Adjustment of the furrow pitch is obtained on the one hand by modifying the common angular position of the plow bottoms with respect to the plow beam and on the other hand by modifying the angular position of the beam with respect to the tractor in order to ensure that the lines of action of the plow bottoms are aligned with respect to the direction of forward travel. This is effected by a double acting hydraulic cylinder arrangement.

A similar system is known from FR—A—2438959. It is also known that in the case of a rollover plow, the beam is capable of undergoing a pivotal displacement through an angle of 180° about a generally longitudinal axis. Such rollover mechanisms for two-way plows are conventional and reference may be made to U.S. patent No. 3554294 for a more detailed disclosure.

The double problem encountered in gang plows lies in the fact that, on the one hand, the furrow-cutting lines or so-called lines of action of the plow bottoms must be parallel to the direction of forward travel while plowing is in progress and after or during adjustment of spacing of said lines of action and that, on the other hand, the line of action of the foremost plow bottom must be displaced transversely to the direction of forward travel in order to be located with respect to the furrow cut during the previous trip at a distance equal to the new spacing set by the furrows.

Although many different solutions have already been proposed for solving this problem, they do not prove wholly satisfactory by reason of the complexity of the means employed. The aim of the invention is to improve this type of plow.

According to the invention we provide a fully mounted variable width plow system adapted to be mounted on and pulled by a tractor, said system comprising a hitch assembly including two link arms spaced apart in a common substantially horizontal plane and connected to the tractor at their forward ends, a forecarriage unit extending between and connected to the rearward ends of said link arms, an elongated plow beam extending generally in a horizontal plane and inclined to the direction of forward travel, means pivotally mounting said plow beam for pivotal movement relative to said forecarriage unit in a generally horizontal plane, a plurality of plow bottom assemblies each including a support bracket pivotally attached at a point of articulation to said plow beam for movement about a generally vertical pivot axis, the points being located so that said plow bottom assemblies are equally spaced along said plow beam, an elongated coupling member extending generally parallel to said plow beam and being pivotally connected about a generally vertical pivot axis to each of said support brackets to interconnect the plow bottom assemblies in such a manner that the assemblies remain in parallel relationship, a double acting hydraulic cylinder anchored at one end to said plow beam such that actuation of said hydraulic cylinder will result in equal pivotal movement of each plow bottom assembly relative to said plow beam as well as a relative pivotal movement between said plow beam and said forecarriage unit; the means for pivotally mounting the plow beam relative to the forecarriage unit being a direct pivot connection at a first point of articulation between the plow beam and the forecarriage unit, a first end of a rigid coupling member being pivotally attached at a second point of articulation to said forecarriage unit, a second end of said rigid coupling member being pivotally attached at a third point of articulation to the support bracket of the foremost plow bottom assembly, characterised in that in the mean position of adjustment, a rectangular trapezoid is formed by said first, second and third points of articulation and a fourth point of articulation which is the point of pivotal attachment of said plow beam to said support bracket of the foremost plow bottom assembly, in which trapezoid the long base is defined by said first and second points, the short base is defined by said fourth and third points and the short perpendicular side is defined by said third and second points of articulation, in that the forward ends of the link arms are each connected to the tractor so that they are capable of slight pivotal movement relative to the tractor about vertical axes, the rearward ends of the link arms are each connected to the forecarriage unit so that they are capable of slight pivotal movement relative to the forecarriage unit about vertical axes, and in that said double acting hydraulic cylinder is anchored at one end to said plow beam and at its other end to said set of interconnected plow bottom assemblies.

This configuration assists the plow bottoms to move into the correct work position automatically, that is to say without the aid of external control means, when a positive control action has set said plow bottoms angularly with respect to their common support beam so as to have the desired spacing between their lines of action.

When making use of a system of this type, a single control device varies the spacing of the lines of action of the plow bottoms by pivotally displacing the plow bottoms on the plow beam. This has the effect of obtaining both a correction of inclination or in other words an alignment of the lines of action with respect to the direction of forward travel, and the suitable transverse displacement of the line of action of the foremost plow bottom.

In the case of a rollover plow system, the forecarriage unit is constructed in two sections pivoted about a longitudinal axis, one section being coupled to the link-arms and the other section being adapted to carry the remainder of the system (plow beam, coupling member, control means, and so forth).

These and other features of the invention will be more apparent to those skilled in the art upon consideration of the following description and accompanying drawings, wherein:—

Figure 1 is a diagrammatic plan view of the plow in accordance with the invention and two sets of lines of action corresponding to two spacings of the plow bottoms;

Figure 2 is a similar view in greater detail showing one position of the plow;

Figure 3 is a similar view to a larger scale and illustrating the operation of the plow in accordance with the invention;

Figures 4 and 5 are graphs which serve to determine the geometry of the system in accordance with the invention;

Figure 6 is a plan view having portions broken away to show the mechanism for adjusting the position of the foremost plow relative to the tractor wheel; and

Figure 7 is a view of a rollover or two-way plow incorporating the subject invention.

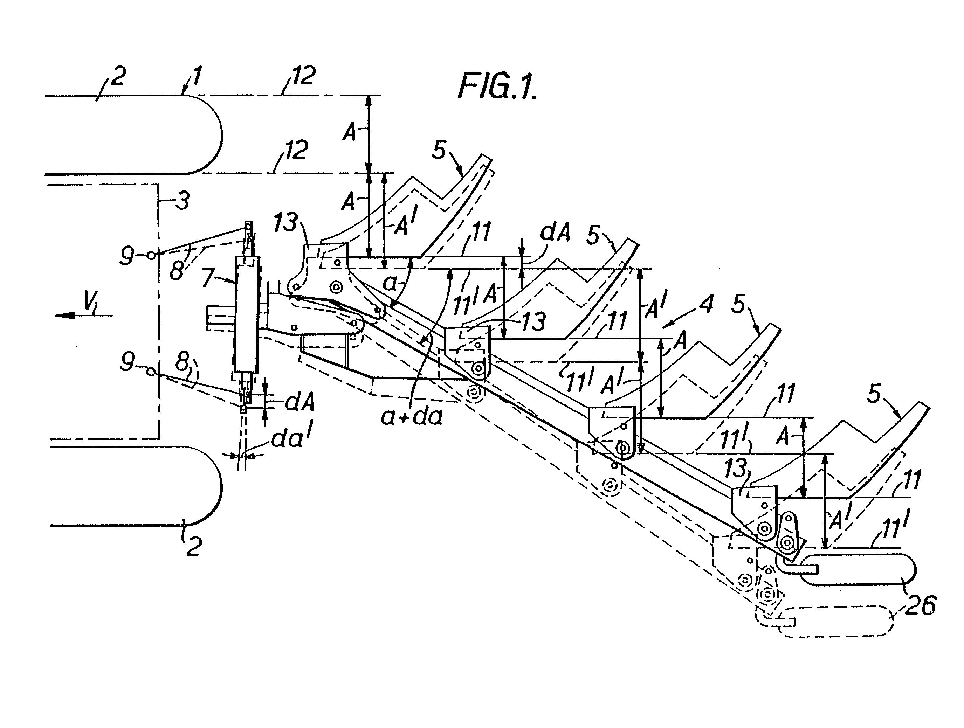

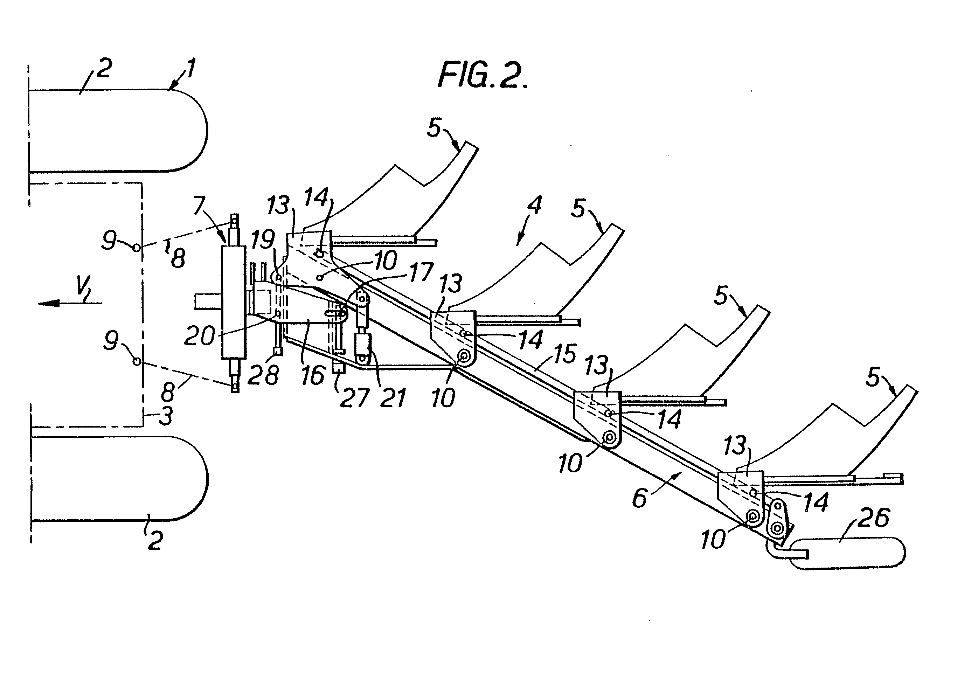

In Figures 1 and 2, a tractor 1 is represented by its rear wheels 2 and its frame 3.

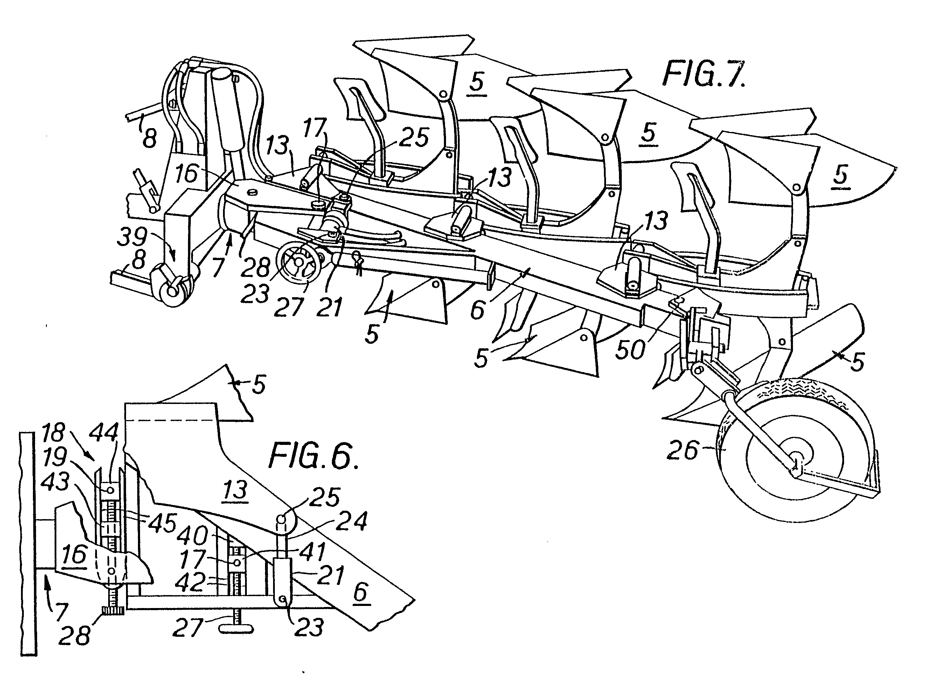

Said tractor draws a gang plow 4 which mainly comprises a plurality of plow bottoms 5, a plow beam 6 for supporting the bottoms and a forecarriage unit 7 for coupling the plow beam 6 to link-arms 8 of the three-point hitch system provided at the rear of tractors. It should be noted that only the lower links 8 are shown in Figures 1 and 2, upper link 8 is shown in Figure 7.

Said lower link-arms are substantially horizontal, converge in the forward direction and are each pivoted at their forward end on a respective vertical pin 9 to the tractor frame 3 to allow pivotal movement about vertical axes. The rearward ends of the links are each pivoted by a connection 39 to the forecarriage unit 7 again allowing relative pivotal displacement about vertical axes.

As shown in FR—A—2401597 the plow bottoms 5 are maintained parallel to each other and are capable of controlled pivotal displacement with respect to the plow beam 6 about vertical pivot-pins 10 which are uniformly spaced along the plow beam.

Before proceeding further with the description, it will first be assumed with reference to Figure 1 that, in each of the two plow positions shown, the forecarriage unit 7, the plow beam 6 and the bottoms 5 make up an assembly in which the parts are fixed relative to each other but capable of free displacement as a single unit in a horizontal plane by virtue of the ability of the link-arms 8 to pivot about vertical axes 9.

Each plow bottom 5 has a furrow-cutting line or so-called line of action 11. The lines of action are aligned with respect to the direction V of forward travel.

If the angular position of the plow bottoms 5 with respect to the plow beam 6 is modified in a manner which will be described hereinafter, this modification being achieved as a result of unitary rotation about respective pivot-pins 10, the spacing A or in other words the pitch of the furrows to be cut either increases or decreases as the case may be an amount dA so as to assume the value A'. With respect to the last furrow 12 which has already been cut, the new line of action 11' of the foremost plow bottom which is aligned with respect to the direction of forward travel V must therefore be displaced by dA with respect to a line of action 11 which would have been the previous line of said foremost plow bottom without adjustment in order to ensure that the new furrow pitch is equal to A'. In regard to the lines of action 11' of the other plow bottoms, these lines must be displaced respectively by 2 dA, 3 dA, and so on with respect to the previous associated theoretical lines 11; this result is obtained as soon as the first line of action 11 is displaced by dA.

It is therefore observed that, in the two positions shown in Figure 1, the line of action of each plow bottom is aligned with respect to the direction V of forward travel and that the lines of action of the plow bottoms are relatively displaced by suitable distances.

The plow as disclosed is so designed and arranged that, once the angle between the plow bottoms 5 and the plow beam 6 has been adjusted and fixed, said bottoms move of their own accord into a position which conforms to this double position-setting under the action of the resistance forces exerted by the soil on the plow bottoms and by free pivotal motion of the link-arms 8 which support the aforementioned assembly.

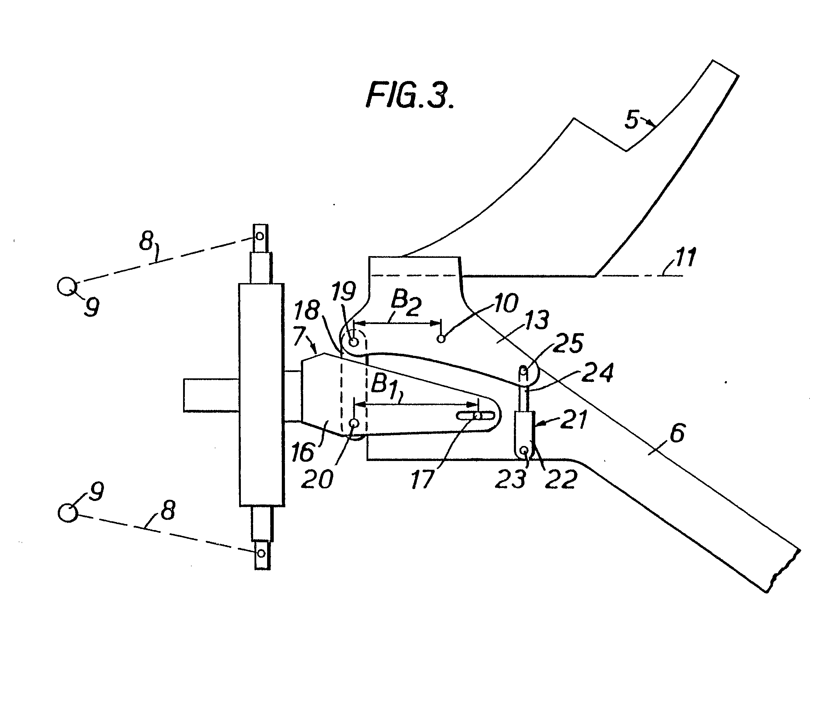

For a description of the remainder of the plow system reference will be made more particularly to Figures 2 and 3.

The plow bottoms 5 are each rigidly fixed to a plow-bottom support bracket 13 which brackets are pivoted at uniform intervals on pivot-pins 10 to the plow beam 6 and on, pivot-pins 14 to a coupling member 15 consisting of a bar or connecting-rod which is of substantial length and is parallel to the plow beam 6. The pivot-pins 14 are also spaced at uniform intervals along member 15 and form collapsible parallelograms with the pivot-pins 10, with the result that when pivoted about pivot-pins 10 the plow bottoms 5 remain parallel to each other. The plurality of plow bottom assemblies interconnected by member 15 thus form a set of interconnected plow bottom assemblies.

The forecarriage unit 7 has a longitudinal rear section or extension 16 and the plow beam 6 is pivotally mounted to unit 7 by a direct pivot connection 17 near the free end of said rear section.

A coupling member 18 serves to connect the support bracket 13 of the foremost plow bottom 5 to the extension 16 and is pivotally attached to the bracket and the extension at 19 and 20 respectively. The four pivot-pins 10, 17, 20, 19 (shown in Figure 3) form a quadrilateral which is normally deformable, that is the angles can be changed, and is made rigid by locking means which constitute at the same time means for adjusting the spacing of the lines of action 11 of the plow bottoms 5.

The adjusting and locking means are constituted by a double-acting hydraulic cylinder 21, the cylinder portion 22 of which is pivotally mounted on the plow beam 6 at 23 and the rod portion 24 of which is pivotally mounted at 25 on the foremost support bracket 13 at a distance from the corresponding pivot-pin 10.

By way of alternative, the cylinder 21 and its rod portion could be mounted to action between the plow beam 6 and the coupling member 15 or another support bracket 13 or alternatively between the member 15 and one of the support brackets 13.

The hydraulic cylinder 21 is controlled from the operator's deck of the tractor. The degree of extension of the hydraulic cylinder is representative of the angle made by the lines of action 11 of the plow bottoms 5 with the plow beam 6. Said extension is controlled from the operator's deck by any suitable means of known type and in such a manner as to ensure that the operator can indicate and obtain the desired angle of inclination of the plow bottoms with respect to the beam.

When the hydraulic cylinder 21 is actuated, the quadrilateral 10, 17, 20, 19 undergoes deformation. When the hydraulic cylinder is not actuated, however, it constitutes a stop which locks said quadrilateral and therefore prevents any relative movement between the plow beam 6, the forecarriage unit 7, the plow-bottom support brackets 13 and the connecting members 15 and 18.

Starting from the plowing position which is shown in full lines in Figure 1 and in which the lines of action 11 are aligned with respect to the direction of forward travel V, if the hydraulic cylinder 21 is actuated in the direction of an increase in the spacing A of the lines of action 11 of the plow bottoms 5, the resistance forces exerted by the soil on the plow bottoms have the effect of maintaining these latter in a position in which the new lines of action 11' remain naturally aligned with respect to the direction of forward travel V or, in other words, the plow bottoms 5 remain parallel to each other. At the same time, the plow beam 6 and the forecarriage unit 7 undergo a displacement with respect to the tractor which is permitted by the pivotal connection of link-arms 8 to the tractor 1 and to the forecarriage unit 7. In consequence, the new lines of action 11' are displaced transversely with respect to the first lines of action 11 over distances which are defined by the geometry of the assembly.

The variation dA in spacing of the lines of action of the plow bottoms is a simple trigonometric function of the initial angle $a$ of the lines of action with the plow beam and of the variation d$a$ of said angle and said variation is proportional to the spacing L of the bottoms along the plow beam.

In practice, the spacing L is within the range of 700 mm to 1000 mm, the angle $a$ is within the range of 25° to 30° and the variation d$a$ is of small magnitude, namely a maximum of 5° above and below the value $a$.

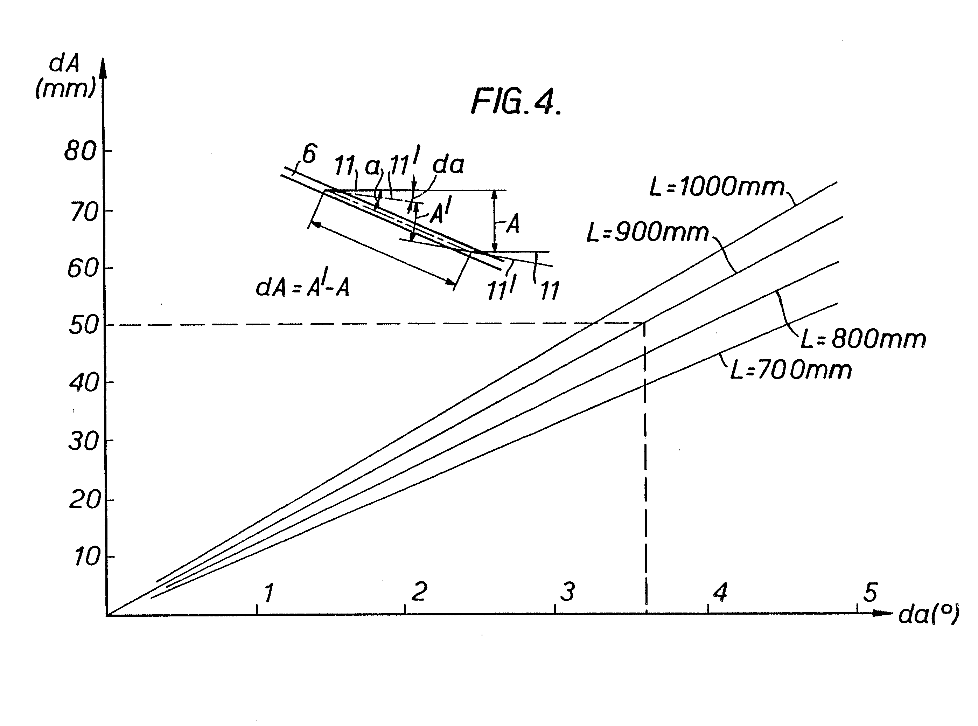

There is shown in Figure 4 a family of curves in which the value of dA given in respect of several values of L is plotted as ordinates in millimeters as a function of d$a$ plotted as abscissae in degrees, when $a$ is within the range of 25° to 30°. This determination is made with an approximation of about 2%, which is quite sufficient in the technical field considered.

In the case of other values of L, $a$ and d$a$ which depart from the values in current use, those skilled in the art will be able to apply the following relation with the desired approximation:

$$dA = L[\sin(a+da) - \sin a]$$

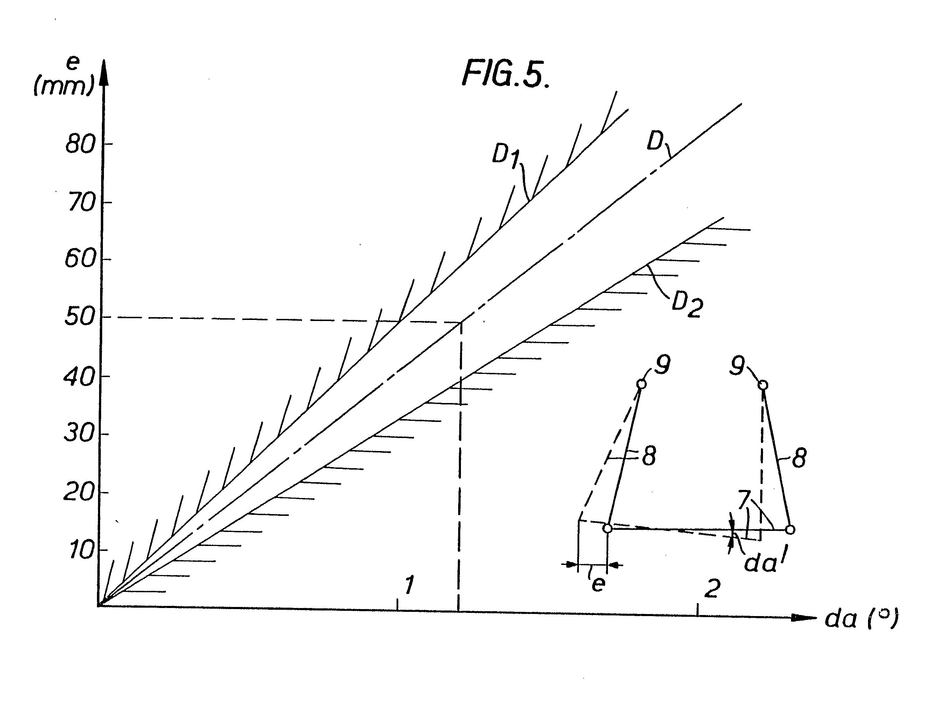

Assuming for the sake of illustration that the plow beam 6 is stationary during operation of the hydraulic cylinder 21 and that the link-arms 8 are dispensed with, the variation d$a$ of the angle $a$ causes the following movements by deformation of the quadrilateral: rotation d$a$ of each plow bottom 5 about its pivot-pin 10, rotation d$a''$ of the forecarriage unit about the pivot-pin 17 and relative rotation d$a'$ of the forecarriage unit 7 with respect to the plow bottoms. After such an adjustment has been completed and the plow is pulled forward the bottoms return automatically to the position of alignment with respect to the direction of forward travel V, the forecarriage unit 7 therefore undergoes a pivotal displacement through the angle d$a'$ by rotation of the link-arms 8 about the pivots 9 and 39. During this pivotal movement, the forecarriage unit 7 also undergoes a displacement which has a component transversely to the direction V, the value $e$, see Figure 5, of said component being a simple function of the quadrilateral formed by the two arms 8.

There is shown in Figure 5 a curve D which is representative of the value of $e$ as a function of $da'$ in respect of low values of $da'$. The values of $e$ are expressed in millimeters in ordinates and the values of $da'$ are expressed in degrees in abscissae.

The two straight lines $D_1$, $D_2$ represent the values of $e$ as a function of $da'$ in the case of extreme types of link-arms 8 at present in existence, the straight line D being the line of mean values between the values of $e$ on the straight lines $D_1$ and $D_2$.

The geometry of the quadrilateral 10, 17, 20, 19 (shown in Figure 3) is such that the angle $da'$ through which the forecarriage unit 7 rotates in response to the adjustment and to the fact that the plow bottoms are maintained in a position of alignment with respect to the direction of forward travel V results in a transverse displacement of the forecarriage unit 7, the value $e$ of said displacement being equal to the variation dA in spacing of the lines of action of the plow bottoms.

By means of the four points of articulation 10, 17, 20, 19 of the quadrilateral, the result thereby achieved is that the line of action of the foremost plow bottom 5 undergoes a transverse displacement during adjustment by a quantity equal to the variation in spacing of the lines of action of the plow bottoms.

In the preferred embodiment of the invention, the quadrilateral 10, 17, 20, 19 is a rectangular trapezoid in the mean position of adjustment ($da=0$). The long base of the trapezoid is defined by the points of articulation 17, 20, the short base of the trapezoid is defined by the points of articulation 10, 19 and the short side perpendicular to the bases is defined by the points of articulation 19, 20.

If $B_1$ and $B_2$ are the lengths of said bases, the angular variations $da$ and $da''$ are in the ratio of $B_1$ to $B_2$ with a sufficient approximation, small angular variations being taken into account.

The angle $da'$ through which the forecarriage unit 7 rotates with respect to the plow bottoms is equal to the difference between the variations $da$ and $da''$; the linear relations of Figures 4 and 5 therefore establish the ratio $B_1/B_2$ which is characteristic of the trapezoid.

In a practical example of construction, the following geometry has been adopted: $L=900$ mm, $B_1=300$ mm, $B_2=200$ mm; as shown in Figures 4 and 5, a variation dA of 50 mm is represented by an angle $da$ of 3.6° and an angle $da'$ of 1.2°.

In known manner, the plow beam 6 is equipped at the rear with at least one gauge wheel 26 which bears on the ground. Gauge wheel 26 is pivotally mounted to the beam 6 at 50 and includes a lever arm 52 which is pivoted to coupling member 15 at 53 such that the expansion or contraction of hydraulic cylinder 21 results in pivotal movement of gauge wheel 26. When hydraulic cylinder 21 is expanded, thereby increasing the spacing between furrows, gauge wheel 26 is pivoted in the counterclockwise direction to thus properly position it for the new attitude of the plow beam 6. Likewise when the hydraulic cylinder 21 is contracted, gauge wheel 26 is pivoted in the clockwise direction and again assumes the proper attitude for the narrower furrow spacing. In the case of a rollover plow, the rear section or extension 16 of the forecarriage unit 7 is capable of pivotal displacement about a longitudinal axis through an angle of 180°.

In accordance with another distinctive feature (shown in Figures 2 and 6), provision is made for means whereby the position of the line of action of the foremost plow bottom at the outset can be adjusted transversely to the track or wheel spacing of the tractor by means of a general transverse displacement of the plow beam 6 and of the components carried by this latter with respect to the forecarriage unit 7. With this objective, the end of a transverse lead-screw 27 is journaled in a member 40 carried by the plow beam 6 and is threaded through a block 41 which carries the pivot-pin 17. The block 41 is confined to slide within a smooth-walled sleeve 42 integral with beam 6. A transverse lead-screw 28 is journaled in a member 43 and is threaded through a block 44 which carries pivot pin 19. The block 44 is confined to slide within a smooth-walled sleeve 45 integral with coupling member 18. Thus by adjusting lead-screws 27 and 28 equal amounts the plow beam 6 and the components carried by it can be moved transversely to provide the desired line of action of the foremost plow relative to the tractor wheel 2.

Figure 7 is an illustration of the subject invention incorporated into a fully mounted two way or rollover plow. Conventional reversing mechanism and trip mechanism such as disclosed in the previous mentioned U.S. Patent No. 3,554,294 and U.S. Patent No 3,662,840, respectively, can be utilized in a two way plow of this type and have no effect upon the subject invention. The forecarriage unit 7 includes a front section and rear section 16 which are pivotally connected to permit pivotal displacement of the rear section relative to the front section about a longitudinal axis through the angle of 180°.

**Claims**

1. A fully mounted variable width plow system adapted to be mounted on and pulled by a tractor, said system comprising a hitch assembly including two link arms (8) spaced apart in a common substantially horizontal plane and connected to the tractor at their forward ends, a forecarriage unit (7) extending between and connected to the rearward ends of said link arms, an elongated plow beam (6) extending generally in a horizontal plane and inclined to the direction of forward travel, means pivotally mounting said plow beam (6) for pivotal movement relative to said forecarriage unit in a generally horizontal plane, a plurality of plow bottom assemblies (5) each including a support bracket (13) pivotally attached at a point of articulation (10) to said plow beam for movement about a generally vertical pivot axis, the points (10) being located so that said plow bottom assemblies are equally spaced along said plow beam, an elongated coupling member (15) extending generally parallel to said plow beam (6) and being pivotally connected about a generally vertical pivot axis (14) to each of said support brackets (13) to interconnect the plow bottom assemblies (5) in such a manner that the assemblies remain in parallel relationship, a double acting hydraulic cylinder (21) anchored at one end to said plow beam (6) such that actuation of said hydraulic cylinder will result in equal pivotal movement of each plow bottom assembly (5) relative to said plow beam (6) as well as a relative pivotal movement between said plow beam (6) and said forecarriage unit (7); the means for pivotally mounting the plow beam (6) relative to the forecarriage unit (7) being a direct pivot connection at a first point of articulation (17) between the plow beam (6) and the forecarriage unit (7), a first end of a rigid coupling member (18) being pivotally attached at a second point of articulation (20) to said forecarriage unit (7), a second end of said rigid coupling member (18) being pivotally attached at a third point of articulation (19) to the support bracket (13) of the foremost plow bottom assembly (5) characterised in that in the mean position of adjustment a rectangular trapezoid is formed by said first, second and third points of articulation (17, 20, 19) and a fourth point of articulation which is the point (10) of pivotal attachment of said plow beam (6) to said support bracket (13) of the foremost plow bottom assembly (5), in which trapezoid the long base is defined by said first and second points (17, 20), the short base is defined by said fourth and third points (10, 19) and the short perpendicular side is defined by said third and second points (19, 20) of articulation, in that the forward ends of the link arms (8) are each connected to the tractor so that they are capable of slight pivotal movement relative to the tractor about vertical axes (9), the rearward ends of the link arms (8) are each connected to the forecarriage unit (7) so that they are capable of slight pivotal movement relative to the forecarriage unit about vertical axes, and in that said double acting hydraulic cylinder (21) is anchored at its other end to said set of interconnected plow bottom assemblies (5).

2. A plow system as claimed in claim 1 characterised in that the ratio of said bases is equal to the ratio of relative rotation of the plow bottom assemblies (5) with respect to the plow beam (6) and the forecarriage unit (7) with respect to said plow beam.

3. A plow system as claimed in claim 1 or claim 2 in which at least one of said first, second, third and fourth points of pivotal attachment (17, 10, 19, 20) is adjustable.

4. A plow system as claimed in any one of the preceding claims wherein said plow system includes means (27, 28, 41, 44) for producing transverse displacement of said plow beam (6) and said set of interconnected plow bottom assemblies (5) with respect to said forecarriage unit (7).

5. A plow system as claimed in any one of the preceding claims wherein said forecarriage unit (7) includes front and rear sections which are pivotally connected to permit pivotal displacement of the rear section (16) relative to the front section about a longitudinal axis through an angle of 180°, said front section being mounted on the rearward ends of said link arms (8) and said pivotal attachment of said coupling member (18) and said plow beam (6) to the forecarriage unit being to said rear section (16).

## Patentansprüche

1. Pflugsystem mit verstellbarer Scharbreite, zum Befestigen an und Ziehen mittels eines Traktors, mit einer Befestigungsvorrichtung, welche zwei Verbindungsarme (8) aufweist, die nebeneinander in einer im wesentlichen horizontalen Ebene angeordnet sind und mit ihren vorderen Endbereichen mit dem Traktor verbunden sind; mit einem Vorgestell (7), welches sich zwischen den rückwärtigen Endbereichen der Verbindungsarme erstreckt und mit diesen verbunden ist; mit einem langgestreckten Pflungbalken (6), der sich im wesentlichen horizontal erstreckt und bezüglich der Zugrichtung des Pfluges abgewinkelt ist; mit Einrichtungen zum schwenkbeweglichen Lagern des Balkens, um diesen bezüglich des Vorgestelles in einer im wesentlichen horizontalen Ebene zu verschwenken; mit einer Mehrzahl von Pflugscharen (5), von denen jede eine Haltevorrichtung (13) aufweist, welche jeweils schwenkbeweglich in einem Gelenkpunkt (10) mit dem Pflugbalken verbunden sind und um eine im wesentlichen vertikale Schwenkachse beweglich sind, wobei die Gelenkpunkte derart angeordnet sind, daß die Pflugscharen äquidistant zueinander entlang des Pflugbalkens angeordnet sind; mit einem langgestreckten Kupplungsteil (15), welches sich im wesentlichen parallel zu dem Pflugsbalken (6) erstreckt und schwenkbeweglich über eine im wesentlichen vertikale Schwenkachse (14) mit jeder der Haltevorrichtungen (13) verbunden ist, um die Pflugscharen (5) derart untereinander zu verbinden, daß diese zueinander parallel ausgerichtet sind; mit einem doppeltwirkenden Hydraulikzylinder (21), der mit einem seiner Enden mit dem Pflugbalken (6) derart verbunden ist, daß eine Betätigung des Hydraulikzylinders eine gleichgerichtete Schwenkbewegung aller Pflugscharen (5) bezüglich des Pflugbalkens (6) und eine relative Schwenkbewegung zwischen dem Pflugbalken (6) und dem Vorgestell (7) bewirkt, wobei die Einrichtungen zum schwenkbeweglichen Lagern des Pflugbalkens relative zu dem Vorgestell (7) eine direkte Schwenkverbindung an einem ersten Gelenkpunkt (17) zwischen dem Pflugsbalken (6) und dem Vorgestell (7) ist; und mit einem starren Kupplungsteil (18), dessen erster Endbereich schwenkbeweglich in einem zweiten Gelenkpunkt (20) mit dem Vorgestell (7) verbunden ist und dessen zweiter Endbereich in einem dritten Gelenkpunkt (19) mit der Haltevorrichtung (13) der vordersten Pflugschar (5) verbunden ist, dadurch gekennzeichnet,

daß in der Grund-Einstellage ein Trapez mit einem rechten Winkel (Fig. 3) zwischen den ersten, zweiten und dritten Gelenkpunkten (17, 20, 19) und einem vierten Gelenkpunkt gebildet ist, wobei der vierte Gelenkpunkt der Punkt (10) der schwenkbeweglichen Lagerung des Pflugbalkens (6) an der Haltevorrichtung (13) der vordersten Pflugschare (5) ist, und wobei weiterhin die lange Grundlinie des Trapezes zwischen dem ersten (17) und zweiten (20) Gelenkpunkt verläuft, die kurze Grundlinie des Trapezes zwischen dem vierten (10) und dritten (19) Gelenkpunkt verläuft und die kurze, im rechten Winkel verlaufende Seitenlinie des Trapezes zwischen dem dritten (19) und zweiten (20) Gelenkpunkt verläuft;

daß die vorderen Endbereiche der Verbindungsarme (8) mit dem Traktor derart verbunden sind, daß die Verbindungsarme eine leichte Schwenkbewegung um vertikale Achsen (9) relative zu dem Traktor ausführen können und die rückwärtigen Endbereiche der Verbindungsarme (8) mit dem Vorgestell (7) derart verbunden sind, daß die Verbindungsarme eine leichte Schwenkbewegung um vertikale Achsen relativ zu dem Vorgestell ausführen können; und

daß der doppeltwirkende Hydraulikzylinder (21) mit seinem anderen Ende mit der Reihe von untereinander verbundenen Pflugscharen (5) verbunden ist.

2. Pflugsystem nach Anspruch 1, dadurch gekennzeichnet, daß das Verhältnis der Grundlinien des Trapezes gleich dem Verhältnis der relativen Schwenkbewegung der Pflugscharen (5) bezüglich des Pflugbalkens (6) und des Vorgestells (7) bezüglich des Pflugbalkens ist.

3. Pflugsystem nach Anspruch 1 oder 2, dadurch gekennzeichnet, daß wenigstens einer der ersten, zweiten, dritten und vierten Gelenkpunkte (17, 10, 19, 20) justierbar ist.

4. Pflugsystem nach einem der Ansprüche 1 bis 3, dadurch gekennzeichnet, daß Einrichtungen (27, 28, 41, 44) vorgesehen sind, um eine quergerichtete Verschiebung des Pflugbalkens (6) und der Reihe von untereinander verbundenen Pflugscharen (5) bezüglich des Vorgestells (7) zu erzeugen.

5. Pflugsystem nach einem der Ansprüche 1 bis 4, dadurch gekennzeichnet, daß das Vorgestell (7) einen vorderen und einen rückwärtigen Abschnitt aufweist, welche schwenkbeweglich miteinander verbunden sind, um eine Schwenkbewegung des rückwärtigen Bereiches (16) relativ zu dem vorderen Bereich um eine Längsachse und um einen Winkel von 180° zu erlauben, wobei der vordere Bereich mit den rückwärtigen Endbereichen der Verbindungsarme (8) verbunden ist und die schwenkbewegliche Anordnung des Kupplungsteiles (18) und des Pflugbalkens (6) zu dem Vorgestell in dem rückwärtigen Abschnitt (16) erfolgt.

## Revendications

1. Un système de charrue à largeur variable totalement monté, agencé pour être monté sur un tracteur et tiré par celui-ci, ledit système comportant un ensemble d'attelage comportant deux bras de liaison (8) espacés dans un plan commun sensiblement horizontal et reliés au tracteur à leur extrémité avant, une unité de tête avant (7) s'étendant entre les extrémités avant desdits bras de liaison et reliée à celles-ci, une poutre allongée de charrue (6) s'étendant généralement dans un plan horizontal et inclinée sur la direction d'avance, des moyens pour le montage pivotant de ladite poutre de charrure (6) de manière à permettre un mouvement de pivotement de celle-ci par rapport à ladite unité de tête avant dans un plan généralement horizontal, une pluralité d'ensembles de corps de labour (5) comportant chacun un support (13) qui est monté de manière pivotante en un point d'articulation (10) sur ladite poutre de charrue pour pouvoir se déplacer autour d'un axe de pivotement généralement vertical, les points (10) étant situés de telle manière que les ensembles de corps de labour sont régulièrement espacés le long de ladite poutre de charrue, un organe allongé de couplage (15) s'étendant dans une direction généralement parallèle à ladite poutre de charrue (6) et étant relié de manière pivotante, autour d'un axe de pivotement (14) généralement vertical, à chacun desdits supports (13) pour interconnecter les ensembles de corps de labour (5) de telle manière que ces ensembles restent parallèles, un cylindre hydraulique à double effet (21) ancré à une extrémité sur ladite poutre de charrue (6) de telle manière que l'actionnement dudit cylindre hydraulique provoque un mouvement de pivotement identique pour chaque ensemble de corps de labour (5) par rapport à ladite poutre de charrue (6) de même qu'un mouvement de pivotement relatif entre ladite poutre de charrue (6) et ladite unité de tête avant (7), les moyens pour le montage pivotant de ladite poutre de charrue (6) par rapport à l'unité de tête avant (7) étant constitués par une liaison directe à pivot au premier point d'articulation (17) entre la poutre de charrue (6) et l'unité de tête avant (7), une première extrémité d'un organe rigide de couplage (18) étant reliée de manière pivotante à un second point d'articulation (20) de ladite unité de tête avant (7), une seconde extrémité dudit organe rigide de couplage (18) étant reliée de manière pivotante à un troisième point d'articulation (19) sur le support (13) du corps de labour avant (5), caractérisé en ce que, pour la position moyenne de réglage, un trapèze rectangle est constitué par lesdits premier, second et troisième points d'articulation (17, 20, 19) et par un quatrième point d'articulation qui est le point (10) de liaison pivotante de ladite poutre de charrue (6) avec ledit support (13) de l'ensemble de corps de labour avant (5), la grande base dudit trapèze étant définie par lesdits premier et second points (17, 20), la petite base étant définie par lesdits quatrième et troisième points (10, 19), et le petit côté perpendiculaire aux bases étant défini par lesdits troisième et second points (19, 20) d'articulation, en ce que les extrémités avant des bras de liaison (8) sont reliées chacune au tracteur de telle manière qu'elles soient susceptibles d'un léger mouvement de pivotement par rapport au tracteur autour d'axes verticaux (9) les extrémités arrière des bras de liaison (8) étant reliées chacune à l'unité de tête avant (7) de telle manière qu'elles soient susceptibles d'un léger mouvement de pivotement par rapport à l'unité de tête avant autour d'axes verticaux, et en ce que ledit cylindre hydraulique (21) à double effet est ancré, à son autre extrémité, à ladite pluralité d'ensembles de corps de labour (6) interconnectés.

2. Un système de charrue selon la revendication 1, caractérisé en ce que le rapport desdites bases est égal au rapport de la rotation relative des ensembles de corps de labour (5) par rapport à la poutre de charrue (6) et de l'unité de tête avant (7) par rapport à ladite poutre de charrue.

3. Un système de charrue selon la revendication 1 ou la revendication 2, dans lequel au moins l'un desdits premier, second, troisième et quatrième points de montage pivotant (17, 10, 19, 20) est réglable.

4. Un système de charrue selon l'une quelconque des revendications précédentes, dans lequel ledit système de charrue comporte des moyens (27, 28, 41, 44) pour produire un déplacement transversal de ladite poutre de charrue (6) et de ladite pluralité d'ensemble de corps de labour (5) interconnectés par rapport à ladite unité de tête avant (7).

5. Un système de charrue selon l'une quelconque des revendications précédentes, dans lequel ladite unité de tête avant (7) comporte des parties avant et arrière qui sont reliées de manière pivotante pour permettre un déplacement de pivotement de la partie arrière (16) par rapport à la partie avant autour d'un axe longitudinal, sur un angle de 180°, ladite partie avant étant montée sur les extrémités arrière desdits bras de liaison (8) et ledit montage pivotant dudit organe de couplage (18) et de ladite poutre de charrue (6) sur l'unité de tête avant se faisant sur la partie arrière (16).

FIG.1.

FIG.2.

FIG.3.

0 047 580

FIG.4.

FIG.5.

FIG.7.

FIG.6.